(19) Europäisches Patentamt
European Patent Office
Office européen des brevets

(11) Veröffentlichungsnummer: **0 223 151**
**B1**

# (12) EUROPÄISCHE PATENTSCHRIFT

(45) Veröffentlichungstag der Patentschrift: **19.09.90**

(51) Int. Cl.⁵: **C08C 19/02,** C08F 8/04

(21) Anmeldenummer: **86115305.4**

(22) Anmeldetag: **05.11.86**

## (54) Verfahren zur selektiven Hydrierung ungesättigter Verbindungen.

(30) Priorität: **19.11.85 DE 3540918**

(43) Veröffentlichungstag der Anmeldung: **27.05.87 Patentblatt 87/22**

(45) Bekanntmachung des Hinweises auf die Patenterteilung: **19.09.90 Patentblatt 90/38**

(84) Benannte Vertragsstaaten: **DE FR GB IT**

(56) Entgegenhaltungen:
**EP-A- 0 134 023**
**DE-A- 3 337 294**
**US-A- 3 700 637**

**Die Akte enthält technische Angaben, die nach dem Eingang der Anmeldung eingereicht wurden und die nicht in dieser Patentschrift enthalten sind.**

(73) Patentinhaber: **BAYER AG,**
**D-5090 Leverkusen 1 Bayerwerk(DE)**

(72) Erfinder: **Fiedler, Paul, Dr., Rybniker Strasse 8,**
**D-5000 Köln 80(DE)**
Erfinder: **Buding, Hartmuth, Dr., Liebermannstrasse 1,**
**D-4047 Dormagen(DE)**
Erfinder: **Braden, Rudolf, Dr., Nothauser Feld 1,**
**D-5068 Odenthal(DE)**

**EP 0 223 151 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur selektiven Hydrierung ungesättigter, gegebenenfalls hochmolekularer Verbindungen, die stickstoffhaltige, reduzierbare Gruppen tragen.

Es ist bekannt, daß man C-C-Doppelbindungen selektiv neben stickstoffhaltigen, reduzierbaren Gruppen an festen Katalysatoren hydrieren kann. Dazu verwendet man Palladium- oder Platin-Katalysatoren. Es werden dabei Ausbeuten bis zu 90% erreicht (Houben-Weyl, Methoden der organischen Chemie, Band IV, 1c, Reduktion I (1980), Seite 168). Die Selektivät ist jedoch häufig unbefriedigend. So erhält man bei Verwendung von Platinoxid zur Hydrierung von 1-Cyanocyclohexen nur 31% des gewünschten Cyanocyclohexans (s. M. Freifelder, Practical Catalytic Hydrogenation, (1971), Seite 157).

Es ist weiterhin bekannt, ungesättigte Nitrile unter Verwendung von Rhodiumkomplexen als homogene Katalysatoren (Wilkinson-Komplex) zu hydrieren. Die Cyanogruppe wird dabei nicht hydriert. Infolge Ligandenaustausch kann mit Nitrilen aber eine Entaktivierung des Katalysators erfolgen (s. Houben-Weyl, a.a.O., Seiten 57 bis 60).

Da Rhodiumkomplexe der Formel $[(C_6H_5)_3P]_3Rh^IX$ auch für die Hydrierung von Nitrilen geeignet sind (DE-AS 1 793 616), muß man erwarten, daß die Selektivität für die Hydrierung von olefinischen Doppelbindungen neben Nitrilgruppen nicht immer ausreicht.

Aus der US-PS 3 454 644 ist bekannt, daß man mit phosphanhaltigen Komplexen des Typs $L_nMX_2$ (L = CO oder tertiäres Phosphan, n = 3 oder 4, M = Ruthenium oder Osmium, X = Halogen und/oder Wasserstoff) Keto-, Formyl-, Nitril-, nichtaromatische -C=C- und -C≡C-Gruppen hydrieren kann, wobei stets sämtliche vorhandene Gruppen dieser Art hydriert werden.

Kationische Rutheniumkomplexe, die als homogene Katalysatoren für die Hydrierung von Olefinen in saurer, methanolischer Lösung geeignet sind, werden in J.C.S. Dalton 1973, S. 846-854, beschrieben. Mit diesen Komplexen erfolgt keine Hydrierung von innenständigen Doppelbindungen.

Besonders problematisch ist die selektive Hydrierung von polymeren, ungesättigten Verbindungen, die stickstoffhaltige, reduzierbare Gruppen tragen, da hier die Abtrennung von Nebenprodukten nicht oder zumindest nur mit extrem hohem Aufwand möglich ist.

Die DE-OS 3 337 294 betrifft ein Verfahren zur selektiven Hydrierung von CC-Doppelbindungen an Nitrilgruppen-haltigen Verbindungen, wie z.B. Cyclohex-3-ennitril, in Gegenwart von Ruthenium-cyclopentadienylkomplexen, wie z.B. RuHCp $(P,Ph_3)_2$, wobei Cp für Cyclopentadienyl und $PPh_3$ für Triphenylphosphan stehen, als Hydrierkatalysatoren. Für die Hydrierung von Polymeren eignen sich diese Katalysatoren aufgrund ihrer mäßigen Aktivität nur bedingt.

Es ist aus US-PS 3 700 637 bekannt, die CC-Doppelbindungen von Dien-(Meth)-acrylnitrilcopolymeren mit großem Anteil an alternierenden Dien-Nitril-Einheiten homogen mit Rhodiumhalogenkomplexkatalysatoren in Chlorbenzol zu hydrieren. Die Eignung anderer Metalle wie Platin, Ruthenium, Iridium, Palladium, Rhenium, Kobalt oder Kupfer, homogen oder heterogen, wird angedeutet.

In der DE-OS 2 539 132 wird eine lösungsmittelabhängige selektive Hydrierung von Butadien-Acrylnitrilcopolymeren mit dem vorbekannten Rhodiumkatalysator postuliert, bei der die CN-Dreifach- und cis-Doppelbindungen erhalten bleiben und die vinylischen und trans-Doppelbindungen quantitativ hydriert werden, wenn Chlorbenzol als Lösungsmittel verwendet wird. In anderen Lösungsmitteln, insbesondere Ketonen, werden nur niedrige Hydriergrade erzielt.

Aus der DE-OS 2 459 115 schließlich ist es bekannt, ungesättigte Polyhydroxykohlenwasserstoffe mit Molgewichten bis zu 4000 unter Erhalt der Hydroxylgruppen mit Hilfe von Rutheniumkatalysatoren homogen oder vorzugsweise heterogen zu hydrieren. Als Lösungsmitel für die heterogene Hydrierung kommen aliphatische Kohlenwasserstoffe, aromatische Kohlenwasserstoffe, Alkohole, Ether, Ester und Wasser in Frage; für die homogene Hydrierung werden keine Angaben gemacht. Die Polymeren sollen auch z.B. Acrylnitril als Comonomer enthalten können, detaillierte Beschreibungen werden nicht gemacht, jedoch ist zu berücksichtigen, daß aus US-PS 3 454 644, Beispiel IX, bekannt ist, daß die Nitrilgruppe von Benzonitril in homogener Ru-Katalyse in Ethanol zur Aminogruppe hydriert wird.

Da die Rhodiumvorkommen sehr klein und Rhodium nicht nur in der chemischen Industrie, sondern überwiegend in der Elektro-, Glas- und Keramikindustrie und in jüngster Zeit ganz besonders in der Automobilindustrie (Abgaskatalysatoren) eingesetzt wird, ist eine Verknappung dieses Edelmetalls in Zukunft nicht auszuschließen.

Ziel der vorliegenden Erfindung war es, ein neues rhodiumunabhängiges, homogenes Hydrierverfahren zur selektiven Hydrierung von ungesättigten Verbindungen, die stickstoffhaltige, reduzierbare Gruppen tragen, bereitzustellen, das es erlaubt, auch polymere, ungesättigte Verbindungen, die stickstoffhaltige reduzierbare Gruppen tragen, unter Erhalt der stickstoffhaltigen, reduzierbaren Gruppen zu hydrieren.

Die Aufgabe wurde überraschenderweise durch homogene Reaktionsführung unter Verwendung von speziellen Rutheniumhydridophosphan-Komplexen gelöst.

Gegenstand der Erfindung ist daher die Hydrierung ungesättigter Verbindungen, die stickstoffhaltige, reduzierbare Gruppen tragen, in homogener Phase, unter Erhalt der stickstoffhaltigen, reduzierbaren Gruppen, dadurch gekennzeichnet, daß als Katalysator eine Verbindung der Formel

$RuH_{2n}L_{5-n}$

verwendet wird, wobei

L Phosphan oder Arsan und
n 1 oder 2 bedeuten.

Die Phosphane und Arsane entsprechen vorzugsweise den Formeln

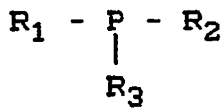 und 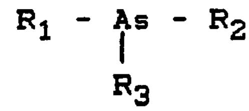

in denen $R_1$, $R_2$ und $R_3$ gleich oder verschieden sein können und Alkyl, Aryl, Cycloalkyl und Aralkyl bedeuten können.

Alkylreste sind beispielsweise geradkettige oder verzweigte, gesättigte Kohlenwasserstoffreste mit 1 bis 20, bevorzugt 1 bis 12, besonders bevorzugt 1 bis 6 C-Atomen.

Cycloalkylreste sind beispielsweise cyclische, gesättigte Kohlenwasserstoffreste mit 5 bis 7 C-Atomen.

Arylreste sind beispielsweise aromatische Kohlenwasserstoffreste aus der Benzolreihe mit 6 bis 18, bevorzugt 6 bis 10 C-Atomen.

Aralkylreste sind beispielsweise durch Aryl substituierte Alkylreste, die im aliphatischen Teil aus einem geradkettigen oder verzweigten Kohlenwasserstoffrest mit 1 bis 6 C-Atomen und im aromatischen Teil aus einem Rest der Benzolreihe, vorzugsweise Phenyl, bestehen.

Die vorstehend erläuterten Alkyl-, Cycloalkyl-, Aryl- und Aralkylreste können gegebenenfalls durch Hydroxy, $C_1$- bis $C_6$-Alkoxy, $C_1$- bis $C_6$-Carb-$C_1$-$C_4$-alkoxy, Fluor, Chlor oder Di-$C_1$-$C_4$-alkylamino substituiert sein, die Cycloalkyl-, Aryl- und Aralkylreste darüber hinaus durch $C_1$- bis $C_6$-Alkyl, Alkyl-, Cycloalkyl- und Aralkylgruppen können Ketogruppen enthalten.

Als Liganden L können beispielsweise Triphenylphosphan, Diethylphenylphosphan, Tritolylphosphan, Trinaphthylphosphan, Diphenylmethylphosphan, Diphenylbutylphosphan, Tris-(p-carbmethoxyphenyl)-phosphan, Tris-(p-cyanophenyl)-phosphan, Tributylphosphan, Tris-(trimethoxyphenyl)phosphane, Bis-(trimethylphenyl)-phenylphosphane, Bis-(trimethoxyphenyl)-phenylphosphane, Trimethylphenyl-diphenyl-phosphane, Trimethoxyphenyldiphenyl-phosphane, Tris-(dimethoxyphenyl)-phosphane, Bis-(dimethylphenyl)-phenylphosphane, Bis-(dimethoxyphenyl)-phenylphosphane, Dimethylphenyldiphenylphosphane, Dimethoxyphenyldiphenylphosphane, Diphenyl-trifluormethylphosphan, Triphenylarsan, Ditolylphenylarsan, Tris-(4-ethoxyphenyl)-arsan, Diphenylcyclohexylarsan, Dibutylphenylarsan und Diethylphenylarsan eingesetzt werden.

Bevorzugt sind Triarylphosphane, insbesondere Triphenylphosphan.

Die verwendeten Komplexe sind zum Teil bekannt. Sie können z.B. aus Rutheniumdichlorid-tris-triphenylphosphan durch Reduktion hergestellt werden (J. Organomet. Chem. 54, (1973) 259-264).

Als ungesättigte Verbindungen, die stickstoffhaltige, reduzierbare Gruppen tragen, kommen z.B. Nitrile, Imine und Oxime in Betracht wobei Nitrile bevorzugt sind.

Hochmolekulare, ungesättigte Verbindungen, die stickstoffhaltige, reduzierbare Gruppen tragen, sind vorzugsweise nitrilgruppenhaltige Copolymere aus 85 bis 50 Gew.-%, bevorzugt 82 bis 55 Gew.-% zumindest eines konjugierten Diens, 15 bis 50 Gew.-%, vorzugsweise 18 bis 45 Gew.-%, zumindest eines ungesättigten Nitrils und 0 bis 10 Gew.-%, bevorzugt 0 bis 8 Gew.-% zumindest eines weiteren mit konjugierten Dienen und ungesättigten Nitrilen copolymerisierbaren Monomeren.

Als konjugierte Diene kommen z.B. Butadien-1,3, 2-Methylbutadien-1,3, 2,3-Dimethylbutadien-1,3 und Pentadien-1,3, als ungesättigte Nitrile Acrylnitril und Methacrylnitril in Frage.

Als weitere Monomere kommen Vinylaromaten wie Styrol, o-, m- oder p-Methylstyrol, Ethylstyrol, Vinylnaphthalin und Vinylpyridin, α,β-ungesättigte Monocarbonsäuren mit 3 bis 5 C-Atomen wie Acrylsäure, Methacrylsäure und Crotonsäure sowie α,βungesättigte Dicarbonsäuren mit 4 bis 5 C-Atomen wie Malein-, Fumar-, Citracon- und Itakonsäure, ferner Vinylalkylether mit 1 bis 4 C-Atomen im Alkylteil in Betracht.

Vorzugsweise wird ein binäres Copolymer aus Butadien und Acrylnitril hydriert.

Das Molekulargewicht der Polymeren ist nicht kritisch und liegt zwischen 500 und 500 000 g/mol, bevorzugt zwischen 1000 und 200 000 g/mol und insbesondere zwischen 30 000 und 150 000 g/mol (Zahlenmittel, ermittelt durch Gelpermeationschromatographie).

Die Umsätze bzw. die Hydriergrade (Prozentsatz der hydrierten CC-Doppelbindungen bezogen auf die Gesamtzahl der ursprünglich im Polymer vorhandenen CC-Doppelbindungen) können bis 100 % betragen. Die Hydrierung kann jedoch erforderlichenfalls vorher abgebrochen werden. Bevorzugt werden Polymerisate mit Hydriergraden von über 80 %, insbesondere von über 90 %, vorzugsweise von über 95 % nach dem erfindungsgemäßen Verfahren hergestellt. Der Hydriergrad wird mittels IR- und NMR-Spektroskopie ermittelt.

Als Lösungsmittel für die Hydrierung kommen besonders niedermolekulare Ketone mit 3 bis 10 C-Atomen, insbesondere Aceton, Butanon, Pentanone, Cyclopentanon und Cyclohexanon in Frage.

Die Konzentration der ungesättigten Verbindung, bezogen auf die Gesamtlösung, beträgt 1 bis 90, vorzugsweise 5 bis 40 Gew.-%.

Die Konzentration an Katalysator, bezogen auf ungesättigte Verbindung (berechnet als Ruthenium), beträgt 10 bis 1000, vorzugsweise 10 bis 600 ppm, besonders bevorzugt 40 bis 500 ppm.

Die Hydrierung wird zweckmäßigerweise bei 80 bis 200°C, vorzugsweise bei 100 bis 180°C, insbesondere bei 115 bis 160°C und 1 bis 350 bar, vorzugsweise bei 20 bis 250 bar Wasserstoffdruck durchgeführt.

Der Katalysator kann nach der Reaktion durch übliche Methoden abgetrennt und das Produkt z.B. durch Destillation oder Kristallisation gereinigt werden.

Im Falle einer hochmolekularen Verbindung wird das Polymer mit Hilfe üblicher Methoden aus der Lösung abgetrennt, z.B. durch Eindampfen, durch Einblasen von Wasserdampf oder durch Zugabe eines Nichtlösungsmittels. Zur Entfernung von Restlösungsmittel oder Wasser schließt sich eine Trocknung an.

Die erfindungsgemäß hydrierten Polymere werden in üblicher Weise durch eine Peroxid- oder Schwefelvulkanisation gehärtet, sofern die Vulkanisation nicht durch eine Strahlenvernetzung durchgeführt wird.

Aufgrund ihrer ausgezeichneten Wetter, Ozon-, Öl- und Heißluftbeständigkeit, sowie Beständigkeit gegenüber kaltem Klima können diese Polymere für hochwertige Gummiartikel, wie Dichtungen, Schläuche, Membranen, für Kabelisolationen und -mäntel eingesetzt werden.

Die erfindungsgemäß hydrierten, niedermolekularen Verbindungen, die stickstoffhaltige, reduzierbare Gruppen tragen, sind wertvolle Zwischenprodukte zur Herstellung von Wirkstoffen.

Beispiel 1

Eine sorgfältig mit Stickstoff gespülte Lösung von 220 g eines statistischen Butadien-Acrylnitrilcopolymeren mit 34,9 Gew.-% Acrylnitril und einer Mooney-Viskosität ML 1+4 (100°C) von 29 in 1800 ml Butanon wurde unter Stickstoffspülung in einem 3 l-Autoklav vorgelegt. Unter weiterer Inertisierung gab man eine ebenfalls mit Stickstoff gespülte Lösung von 590 mg $RuH_4(PPh_3)_3$ in 200 ml Butanon zu und drückte 80 bar Wasserstoff auf. Man heizte bis 130°C auf und setzte dann die Reaktion bei 140 bar Wasserstoffdruck 4 Stunden bei 130°C fort. Der Hydriergrad des Polymeren wurde mittels NMR- und IR-Spektroskopie zu 95 % ermittelt.

Beispiel 2

Nach der Vorschrift von Beispiel 1 wurde eine Hydrierung mit 550 mg $RuH_2(PPh_3)_4$ durchgeführt. Der Hydriergrad des Polymeren betrug nach 6 h Reaktionszeit 97 %

**Patentansprüche**

1. Verfahren zur selektiven Hydrierung ungesättigter Verbindungen die stickstoffhaltige, reduzierbare Gruppen tragen, in homogener Phase unter Erhalt der stickstoffhaltigen, reduzierbaren Gruppen, dadurch gekennzeichnet, daß als Katalysator eine Verbindung der Formel
$RuH_{2n}L_{5-n}$
verwendet wird, wobei
L ein Phosphan oder Arsan und
n 1 oder 2 bedeuten,

2. Verfahren nach Anspruch 1, dadurch gekennzeichnet, daß man als ungesättigte Verbindung, die stickstoffhaltige, reduzierbare Gruppen trägt, ein nitrilgruppenhaltiges Copolymer aus 85 bis 50 Gew.-% zumindest eines konjugierten Diens, 15 bis 50 Gew.-%, zumindest eines ungesättigten Nitrils und 0 bis 10 Gew.-% zumindest eines weiteren mit konjugierten Dienen und ungesättigten Nitrilen copolymerisierbaren Monomeren verwendet.

3. Verfahren nach Anspruch 1, dadurch gekennzeichnet, daß man als Lösungsmittel ein niedermolekulares Keton verwendet.

4. Verfahren nach Anspruch 1, dadurch gekennzeichnet, daß als Liganden L Triarylphosphane eingesetzt werden.

5. Verfahren nach Anspruch 1, dadurch gekennzeichnet, daß als Liganden L Triphenylphosphan verwendet wird.

6. Verfahren nach Anspruch 1, dadurch gekennzeichnet, daß man bei 80 bis 200°C hydriert.

7. Verfahren nach Anspruch 1, dadurch gekennzeichnet, daß man bei bis 350 bar Wasserstoffdruck hydriert.

**Claims**

1. A process for the selective hydrogenation of unsaturated compounds bearing nitrogen-containing reducible groups in homogeneous phase, the nitrogen-containing reducible groups remaining intact, characterized in that a compound corresponding to the following formula

$RuH_{2n}L_{5-n}$

in which

L is a phosphane or arsane and n is 1 or 2, is used as catalyst.

2. A process as claimed in claim 1, characterized in that a copolymer containing nitrile groups of 85 to 50% by weight of at least one conjugated diene, 15 to 50% by weight of at least one unsaturated nitrile and 0 to 10% by weight of at least one other monomer copolymerizable with conjugated dienes and unsaturated nitriles is used as the unsaturated compound bearing nitrogen-containing reducible groups.

3. A process as claimed in claim 1, characterized in that a low molecular weight ketone is used as the solvent.

4. A process as claimed in claim 1, characterized in that triarylphosphanes are used as the ligands L.

5. A process as claimed in claim 1, characterized in that triphenylphosphane is used as the ligand L.

6. A process as claimed in claim 1, characterized in that the hydrogenation is carried out at 80 to 200°C.

7. A process as claimed in claim 1, characterized in that the hydrogenation is carried out under a hydrogen pressure of 1 to 350 bar.

**Revendications**

1. Procédé d'hydrogénation sélective de composés non saturés qui portent des groupes azotés réductibles, en phase homogène avec maintien des groupes réductibles contenant de l'azote, caractérisé en ce qu'on utilise comme catalyseur un composé de formule

$RuH_{2n}L_{5-n}$

dans laquelle

L est un phosphane ou un arsane et n a la valeur 1 ou 2.

2. Procédé suivant la revendication 1, caractérisé en ce qu'on utilise comme composé non saturé qui porte des groupes azotés réductibles, un copolymère porteur de groupes nitrile constitué de 85 à 50 % en poids d'au moins un diène conjugué, 15 à 50 % en poids d'au moins un nitrile non saturé et 0 à 10 % en poids d'au moins un autre monomère copolymérisable avec des diènes conjugués et des nitriles non saturés.

3. Procédé suivant la revendication 1, caractérisé en ce qu'on utilise comme solvant une cétone de bas poids moléculaire.

4. Procédé suivant la revendication 1, caractérisé en ce qu'on utilise comme ligands des L-triarylphosphanes.

5. Procédé suivant la revendication 1, caractérisé en ce qu'on utilise comme ligand le L-triphénylphosphane.

6. Procédé suivant la revendication 1, caractérisé en ce qu'on conduit l'hydrogénation à 80-200°C.

7. Procédé suivant la revendication 1, caractérisé en ce qu'on conduit l'hydrogénation sous pression d'hydrogène de 1 à 350 bars.